(19)

**Europäisches Patentamt**

**European Patent Office**

**Office européen des brevets**

(11) **EP 2 290 596 A1**

(12) **EUROPEAN PATENT APPLICATION**

(43) Date of publication:
**02.03.2011 Bulletin 2011/09**

(51) Int Cl.:
***G06Q 10/00*** *(2006.01)*

(21) Application number: **10173148.7**

(22) Date of filing: **18.08.2010**

<table>
<tr><td>

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **27.08.2009 JP 2009197356**

(71) Applicant: **Hitachi Ltd.**
**Tokyo 100-8280 (JP)**

(72) Inventors:
 • **Katagiri, Yukinori**
  **Tokyo 100-8220 (JP)**

</td><td>

 • **Nagafuchi, Naoyuki**
  **Tokyo 100-8220 (JP)**
 • **Yoshida, Takuya**
  **Tokyo 100-8220 (JP)**
 • **Yashiki, Tatsuro**
  **Tokyo 100-8220 (JP)**

(74) Representative: **MERH-IP**
**Matias Erny Reichl Hoffmann**
**Paul-Heyse-Strasse 29**
**80336 München (DE)**

</td></tr>
</table>

(54) **Power plant life cycle costing system and power plant life cycle costing method**

(57) The power plant life cycle costing system 1 for costing a power plant life cycle according to the present invention includes a flow chart generation unit 4 for generating a power plant system flow chart based on specifications and cost information of major components of the power plant stored in a major component specifications storage unit 3, and plant specifications input from a plant specifications input unit 2; a power plant planning unit for calculating and generating a power plant life cycle cost, a plant efficiency and an operation plan including a maintenance plan as optimization indexes of a power plant configuration based on information from the flow chart generation unit 4, specifications and cost information of auxiliary devices of the power plant stored in a piping and device specifications storage unit 8, and optimization conditions of a power plant configuration input by an optimizing method selection unit 12; and an optimized result output unit 13 for outputting a calculated value and a planned result calculated and generated by the power plant planning unit.

FIG.1

EP 2 290 596 A1

**Description**

TECHNICAL FIELD

The present invention relates to a power plant life cycle costing system and a power plant life cycle costing method involving a plant specifications planning system of a plant such as a power plant that supplies electric power, which can quantitatively evaluate economic efficiency and environmental performance of the plant by calculating various costs on constructions, operations, maintenances and deconstructions of the plant.

BACKGROUND ART

Against backdrops of a global power demand increase due to rapid industrializations and rapid global population growths in developing countries, abrupt rising price of fuel, and tightening of regulations for exhaust emission of environmental impact substances as represented by $CO_2$, it is desired for a power plat (also referred to as just a "plant" hereinafter) to further enhance efficiency and environmental performance. In addition, as for a plant owner, a vendor, a distribution source or a supplier, it is one of crucial problems to realize enhancement of maintenance/operation such as reduction of various costs on a construction and periodic inspections of a power plant, and shortening of inspection time periods.

In light of these backdrops, it has been tried to apply a "life cycle management" concept to planning of power plant specifications. In general, a "life cycle management" is a scheme for estimating costs and environmental performances required in a product life cycle of a household electrical appliance from manufacturing, transportation, distribution, usage to disposal, and a planning and design of a product is carried out based on the above estimations. Particularly, a life cycle costing, as one of life cycle management schemes, is for estimating various costs required in manufacturing processes such as costs of material and purveyance, and such an approach has been considered also in a power plant planning in which cost reduction is an urgent problem.

For example, the technique disclosed in JP2000-122712 A (Paragraphs [0023], [0027], Fig. 1, etc.) employs database for storing data regarding costs on constructions and maintenances of a plant, and calculates life cycle costs using data stored in the database, so as to determine a updating time of the plant based on economical indexes. JP2002-34151 A (Paragraphs [0017], [0027], Figs. 2 to 5) provides a apparatus having database for storing data of information regarding components and equipments constituting a system, and the apparatus determines a highly reliable system for reducing costs on system equipments based on the stored data and the required specifications for the system at the time of planning the system.

As a further prior art related to the present invention, JP2002-297710 A (Paragraph [0029], Figs. 1, 7, 8, etc.) and JP11-142298 A (Paragraphs [0017], [0023], Fig. 2, etc.) are cited herein. JP2002-297710 A discloses that deteriorations of parts of turbine blades are predicted based on the usage environment and the material properties of the parts of the turbine blades, and start/stop cycles of the turbine, etc., so as to create an optimized maintenance plan for a power plant.

JP11-142298 A discloses a system that performs a cost calculation in consideration of an exhaustive service period of a plant such as a boiler plant, and predicts optimized replacement time for replacing components of a plant at a minimum cost, taking account of mutual influences among the components to be replaced.

As one of features of a power plant which is a subject matter of the present invention, a combination of plant major components such as steam turbines or gas turbines, and plant auxiliary devices such as pumps and valves may affect costs on an exhaustive plant life cycle of the power plant, including total performance of a plant, equipment inspection/replacement schedules, initial costs, running costs and maintenance costs, etc.

Generally known optimization techniques as disclosed in JP2000-122712 A and JP2002-34151 A, for example, handle a performance and a cost in a tradeoff relationship (i.e. a higher performance results in increase in cost and sacrificing the cost; meanwhile a lower performance results in decrease in cost and sacrificing the performance) so as to optimize a system to realize a maximum performance as well as a minimum cost using various algorithms. However, in a power plant having a main object to provide a stable power supply, there are not a few cases that require a configuration of components to give a performance margin along with maximum reliability, or a configuration of components capable of continuous power supply even if initial cost becomes a little higher.

In other cases, some customers demand configurations of components to give priority to more rapid recovery at a failure time by using auxiliary devices that are inferior in performance but more readily available, or configurations of components that use auxiliary devices that are superior in performance and durability at a higher initial cost, but that can reduce a failure rate, thereby to reduce running and maintenance costs. For example, usage of equipments having a higher cost gives fewer failures, so that the initial cost becomes higher but the running cost becomes lower. As such, there are various needs of customers in a plant life cycle from constructions, operations to deconstructions of a plant.

Meanwhile, JP2002-297710 A merely creates a maintenance plan of a power plant based on deterioration statuses of turbine blades, and there is no description regarding efficiency of a power plant system. JP11-142298A merely considers a system of a boiler alone and provides a operational optimization, so that there is no description regarding optimization of efficiency and plan of a system.

DISCLOSRURE OF INVENTION

In light of the above difficulties, the present invention has an object to provide a power plant life cycle costing system and a power plant life cycle costing method that provide an exhaustive estimation on efficiency, reliability, running/ maintenance plant, etc., of a power plant.

In order to achieve the above object, according to one aspect of the present invention, there is provided a power plant life cycle costing system for costing a power plant life cycle. This system includes a flow chart generation unit for generating a power plant system flow chart based on specifications and cost information of major components of the power plant stored in a major component specifications storage unit, and plant specifications input from a plant specifications input unit; a power plant planning unit for calculating and generating a power plant life cycle cost, a plant efficiency and an operation plan including a maintenance plan as optimization indexes of a power plant configuration based on information from the flow chart generation unit, specifications and cost information of auxiliary devices of the power plant stored in a piping and device specifications storage unit, and optimization conditions of a power plant configuration input by an optimizing method selection unit; and an optimized result output unit for outputting a calculated value and a planned result calculated and generated by the power plant planning unit.

According to another aspect of the present invention, there is provided a power plant life cycle costing method for costing a power plant life cycle. This method includes, in a flow chart generation unit, generating a power plant system flow chart based on specifications and cost information of major component of the power plant stored in a major component specifications storage unit, and plant specifications input from a plant specifications input unit; in a power plant planning unit, calculating and generating a power plant life cycle cost, a plant efficiency and an operation plan including a maintenance plan as optimization indexes of a power plant configuration based on information from the flow chart generation unit, specifications and cost information of auxiliary devices of the power plant stored in a piping and device specifications storage unit, and optimization conditions of a power plant configuration input by an optimizing method selection unit; and in an optimized result output unit, outputting a calculated value and a planned result calculated and generated by the power plant planning unit.

BRIEF DESCRIPTION OF DRAWINGS

Fig. 1 is a schematic diagram showing functions of a power plant life cycle costing system according to an embodiment of the present invention.
Fig. 2 is a diagram showing an example of a system flow chart of a general combined cycle plant.
Fig. 3 is a configuration diagram of a power plant life cycle costing system that is hardware for realizing the power plant life cycle costing system according to the embodiment.
Fig. 4 is a schematic diagram showing an outline of a plant major component information generation unit of the power plant life cycle costing system according to the embodiment.
Fig. 5 is a diagram showing a calculation process of fuel consumption characteristics in a power plant system efficiency prediction unit according to the embodiment.
Fig. 6 is a diagram showing a detailed process of the plan generation unit according to the embodiment.
Fig.7 is a diagram showing a detailed configuration of a cost prediction unit according to the embodiment.
Fig. 8 is a diagram showing a schematic diagram showing details of an optimization unit according to the embodiment.
Fig. 9 is a diagram showing an example of a plant estimation entry screen that displays information input by a user and information to prompt the user to confirm his or her input information, according to the embodiment.
Fig. 10 is a diagram showing an example of a plant optimization screen that displays information input by a user during a optimization calculation and information to be confirmed by the user when completing the optimization calculation, according to the embodiment.

DETAILED DESCRIPTION OF PREFERRED EMBODIMENT

Descriptions will be provided on an embodiment of the present invention with reference to the attached drawings hereinafter.

<Outline of Power Plant Life Cycle Costing System 1>

In a planning stage of a plant such as a power plant that supplies electric power, the power plant life cycle costing system 1 estimates a life cycle cost from constructions, operations, maintenances to disposals (deconstructions) of a power plant in an integral manner, and provides a comprehensive estimation including efficiency, reliability, running plan, maintenance plan, etc., of a plant.

< Configuration of Power Plant Life Cycle Costing System 1>

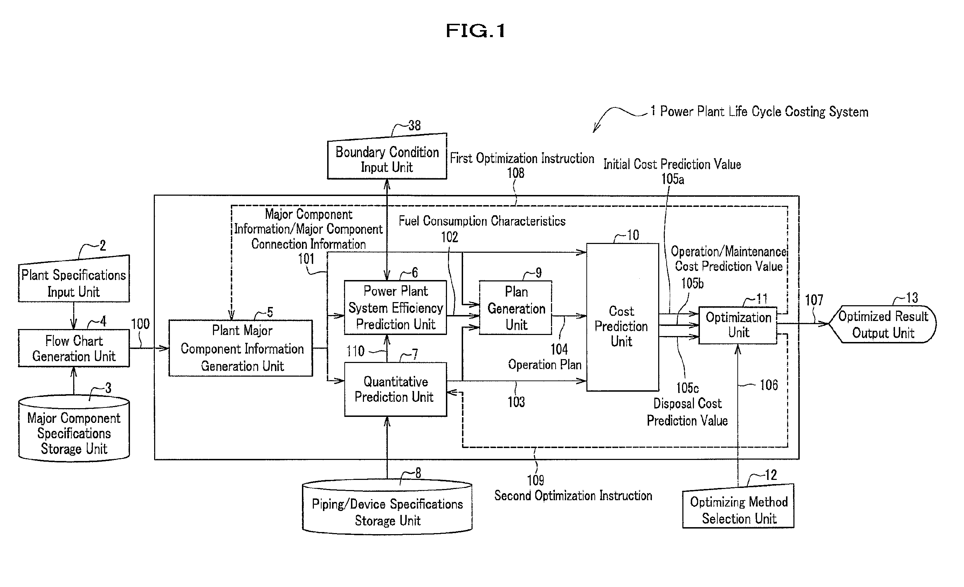

Fig. 1 is a schematic diagram showing functions of the power plant life cycle costing system 1.

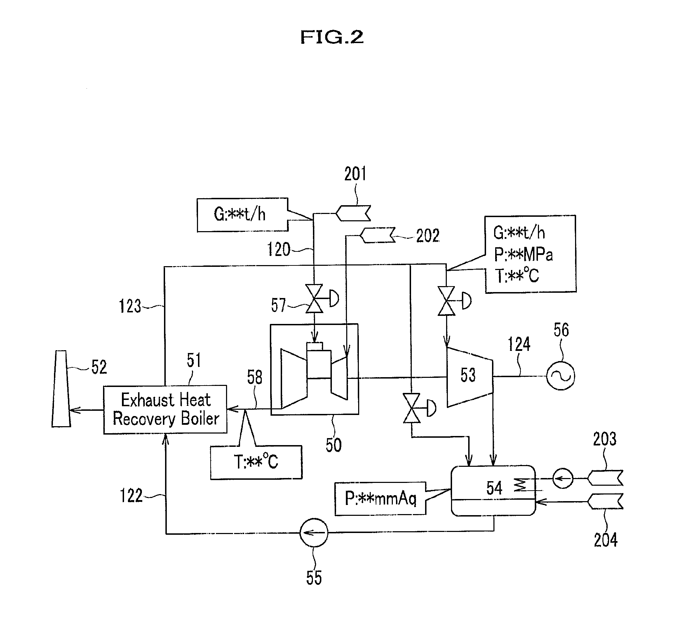

Fig. 2 shows an example of a system flow chart of a general combined cycle plant (combined power plant).

As shown in Fig. 1, the power plant life cycle costing system 1 includes the flow chart generating unit 4 that generates a system flow chart of the power plant (see Fig. 2) based on plant specifications input from the plant specifications input unit 2, and on specifications of the major components such as types and durable years, and cost information regarding prices of devices/equipments and prices of replacement devices of the major components, etc. that are previously stored in the major component specifications storage unit 3.

As described above, the flow chart generation unit 4 serves as a tool for generating a system flow chart.

Hereinafter, descriptions will be provided on the system flow chart of a plant generated by the flow chart generation unit 4.

The system flow chart of a combined cycle plant as shown in Fig. 2 represents mutual connection statuses between the plant major components constituting the power plant (such as the gas turbine 50, the steam turbine 53, the exhaust heat recovery boiler 51 and the condenser 54) and the auxiliary devices which are devices of the power plant other than the major components, and a type of a fluid and statuses of temperature and pressure of a fluid, which flows through the power plant.

The combined cycle plant includes the gas turbine 50, the steam turbine 53, the exhaust heat recovery boiler 51 and the condenser 54, which serve as the major components of a combined cycle plant, and also includes the exhaust stack 52, the water supply pump 55, the power generator 56 and the fuel flow rate regulating valve 57, etc., which serve as the main auxiliary devices thereof.

In this system flow chart, as information regarding fluid flowing through the plant, each flow direction from and to the turbine exhaust 58, the fuel 120, the water supply 122 and the main steam 123 is indicated in an arrow mark. In addition, various major planned values (temperature/pressure/flow-rate conditions) of the temperature (T), the pressure (P), the flow rate (G) are indicated, so that the running statuses of the power plant can be grasped.

In the system flow chart of Fig. 2, the drive shaft 124 is also indicated as a mechanical transmission component. The fuel 201, the air 202, the cooling water 203 and the raw water 204 indicated with arrow feather marks represent fluids supplied outside the system.

The system flow chart is created by a plant maker when they create the plant specifications. In Fig. 2, the system flow chart is used to indicate the entire configurations of the combined cycle plant, but a part of the plant may be used to represent a more detailed system flow chart.

One example of the system flow chart of the plant generated by the flow chart generation unit 4 has been described as aforestated.

The power plant life cycle costing system 1 as shown in Fig. 1 includes the plant major component information generation unit 5 that extracts the plant information 100 required by the power plant life cycle costing system 1 from the system flow chart of the plant (see Fig. 2) generated by the chart generation unit 4, the quantitative prediction unit 7 that predicts amount of materials such as piping and devices required for the auxiliary devices, etc. relative to the plant major components of the plant, the power plant system efficiency prediction unit 6 that predicts output efficiency such as fuel, relative to input such as power (output/input), the plan generation unit 9 that creates the operation plan 104 including maintenance plan such as operation information and maintenance information of the plant, etc., the cost prediction unit 10 that predicts various costs of the plant, and the optimization unit 11 that optimizes the plant to be constructed.

Note that the plant major component information generation unit 5, the power plant system efficiency prediction unit 6, the quantitative prediction unit 7, the plan generation unit 9, the cost prediction unit 10 and the optimization unit 11 constitute the power plant planning unit.

<Hardware Configuration To Realize Plant Life Cycle Costing System 1>

Next, descriptions will be provided on the hardware configuration to realize the power plant life cycle costing system 1.

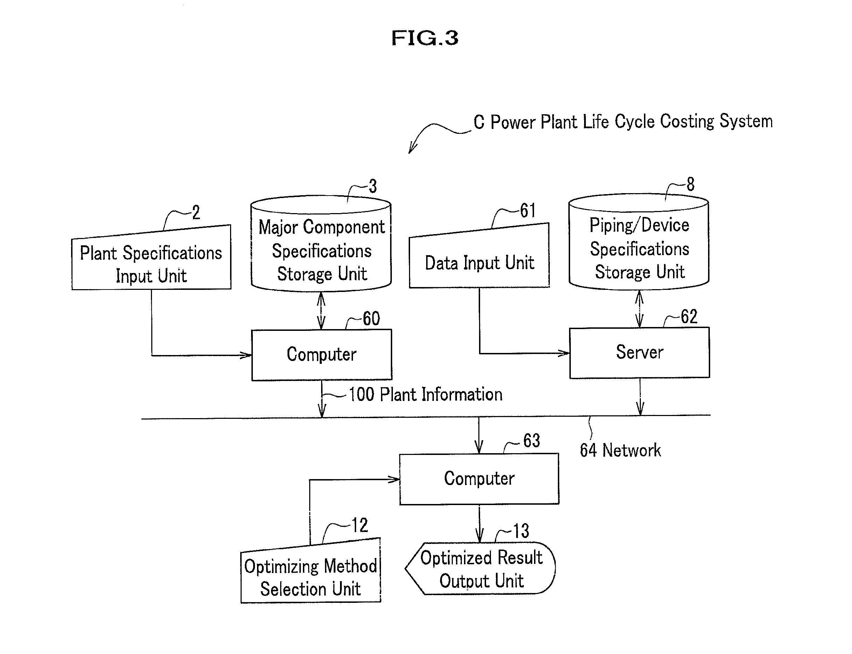

Fig. 3 is a configuration diagram of the power plant life cycle costing system C that is hardware for realizing the power plant life cycle costing system 1.

The power plant life cycle costing system C to realize the power plant life cycle costing system 1 (see Fig. 1) includes the computer 60, the server 62, the computer 63 and the network 64, etc., as shown in Fig. 3.

The computer 60 is coupled to the plant specifications input unit 2 and the major component specifications storage unit 3. The computer 60 embodies the flow chart generation unit 4 by executing the program, and outputs the plant information 100 that is output data from the flow chart generation unit 4 (see Fig. 1) via the network 64 to the computer 63.

When the plant specifications is created in the flow chart generation unit 4, the plant major components are referred to in the major component specifications storage unit 3 if necessary, and user's input to the plant specifications input unit 2 is used to define and or update the configuration and the connection status of the plant major components.

The server 62 is coupled to the data input unit 61 and the piping/device specifications storage unit 8. The server 62 allows a user to edit information of the piping/device specifications storage unit 8 using the data input unit 61. The data input unit 61 is also used as the boundary condition input unit 38 described later.

The server 62 embodies the quantitative prediction unit 7, the power plant system efficiency prediction unit 6, the plan generation unit 9 and the cost prediction unit 10 by executing the program.

The server 62 transmits/receives concerned information to the network 64 in response to a reference request regarding the piping/component specifications from another computer.

The computer 63 embodies the optimization unit 11 as shown in Fig. 1 by executing the program. The computer 63 is coupled to the optimizing method selection unit 12 (see Fig. 1) and the optimized result output unit 13, so that optimization conditions can be set using the optimizing method selection unit 12 and optimized results can be displayed using the optimized result output unit 13. The computer 63 inputs the plant information 100 from the computer 60 via the network 64 and inquires piping and component specifications of the server and inputs this information.

In Fig. 3, the server 62 is used to manage the piping/component specifications stored in the piping/device specification storage unit 8, but a computer having an equivalent function to a server may also be used for this purpose. Either of the Internet and other dedicated lines may also be used as the network 64, and the invention is not limited to this.

In Fig. 3, the programs of the power plant life cycle costing system 1 such as the flow chart generation unit 4, etc., and the data input/output managements for the piping and component specifications are distributed among other computers, but this system may be realized in a single computer. In such a case, the plant specifications input unit 2 and the optimizing method selection unit 12 use the identical input device.

A server, a PC (personal computer), a WS (WorkStation) and a large-scaled computer and the like may be applicable to the above computer, and the present invention is not limited to this.

<Plant Major Component Information Generation Unit 5>

Next, each component of the power plant life cycle costing system 1 (see Fig. 1) will be described in detail.

The plant major component information generation unit 5 as shown in Fig. 1 extracts the plant major component information such as costs and specifications of the major components of the power plant, and the connection information regarding the plant major components from the information of the power plant system flow chart (see Fig. 2) generated in the flow chart generation unit 4.

The plant major component information is information regarding types, durable years of the major components of the power plant, device prices of the major components, and prices of replacement devices constituting the major components, various costs on disposal (deconstructions) of the major components, and temperature/pressure/flow rate conditions of fluids that flow in and out.

The connection information of the plant major components (also refers to as the "major component connection information") denotes information regarding devices and equipments in the upstream of the major components, types of fluids from the devices and equipments in the upstream, fluid flow-in positions into the major components, devices and equipments in the downstream of the major components, types of fluids into the devices and equipments in the downstream, and fluid flow-out positions form the major components.

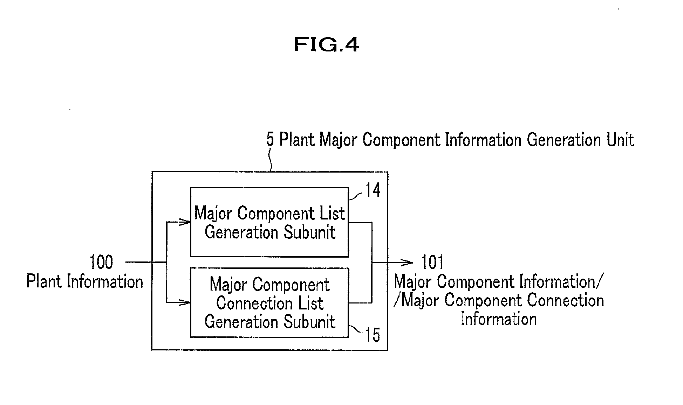

Fig. 4 is a schematic diagram showing an outline of the plant major component information generation unit 5 of the power plant life cycle costing system 1 (see Fig. 1).

As shown in Fig. 4, the plant major component information generation unit 5 includes the major component list generation subunit 14 that outputs information regarding the major components of the power plant, and the major component connection list generation subunit 15 that extracts the lists of information regarding mutual connections among the major components, the major devices/equipments described later and the major pumps.

The major component list generation subunit 14 extracts, from the plant information 100 output from the flow chart generation unit 4, information regarding the major components, such as the gas turbine 50 (Fig. 2) that generates a rotational movement by a high-energy combustion gas, the steam turbine 53 that converts energy of steam into a rotational movement so as to generate power, the exhaust heat recovery boiler 51 that collects exhaust heat thereby to generate steam, and the condenser 54 that brings back steam after used in the steam turbine 53 into water, and outputs this information as the major component information.

Identifiers that are unique in the power plant are assigned to the above various information of the major component information, and these identifiers allow references to the types, the durable years and the prices of devices and equipments of the major components, the prices of replacement devices of the major components, the various costs on disposals (deconstructions) of the major components, and temperature/pressure/flow rate conditions of fluids that flow in and out.

The deaerator and the feed-water heater which are major devices and equipments subordinate to the major components are also extracted. These major devices and equipments are also assigned with identifiers, and these identifiers allow references to the types, the durable years and the prices of devices and equipments of the major components, the prices of replacement devices of the major devices and equipments, the various costs on disposals (deconstructions) of the major devices and components, and the temperature/pressure/flow rate conditions of fluids that flow in and out.

In addition, identifiers are also assigned to the major pumps such as a water supply pump and a condensate pump, and these identifiers allow references to the types, the durable years and the prices of devices and equipments of the major pumps, the prices of replacement devices of the major pumps, various costs on disposal (deconstructions) of the major pumps, and the temperature/pressure/flow rate conditions of fluids that flows in and out.

The physical entities of the above various referable information through the identifiers are stored in the major component specifications storage unit 3 (see Fig. 1).

Then, the major component connection list generation subunit 15 in Fig. 4 extracts, as the major component connection information, sub-lists of information regarding mutual connections among the major components, the major devices and equipments, the major pumps. In the major component connection information, the devices and equipments in the upstream of the major components, the types of fluids from the equipment in the upstream, the fluid flow-in positions into the major components, the devices and equipments in the downstream of the major components, the types of fluids into the devices and equipments in the downstream, and the fluid flow-out positions form the major components, as described above.

The information generated in the flow chart generation unit 4 (see Fig. 1) includes not only the major component information and the major component connection information but also various information regarding various piping used for water filling and drain of the major components, instruments used for measuring temperatures and pressures, and piping and devices/equipments for safety protection, and the plant major component information generation unit 5 (see Fig. 1 and Fig. 4) once deletes these various information and generates information representing simple piping/devices and equipment configurations only constituted by the major components.

Hereinafter, the major component information and the major component connection information are integrally referred to as the major component information/major component connection information 101, which is represented with a numeral reference "101".

## <Quantitative Prediction Unit 7 >

The quantitative prediction unit 7 as shown in Fig. 1 predicts auxiliary devices, instruments, piping and bolts/nuts belonging to the major components based on the major component information/major component connection information 101 obtained in the plant major component information generation unit 5, and outputs the auxiliary devices/piping list 103, and further outputs the power plant efficiency correction value 110 corresponding to the auxiliary devices/piping list 103.

In the qualitative prediction of the quantitative prediction unit 7, sub-lists of auxiliary devices and instruments required for the main components are predicted based on the past plant actual performance recorded in the piping/device specification storage unit 8; and from the sub-lists of the auxiliary devices and the instruments, sub-lists of piping and bolts/nuts required for installing the auxiliary devices and the instruments are predicted based on information of the piping/device specification storage unit 8. And then, the sub-lists of the auxiliary devices and the instruments and the sub-lists of the piping and bolts/nuts are listed into the auxiliary devices/piping list 103.

Identifiers are uniquely assigned to the auxiliary devices and the instruments, which are extracted from the piping/device specification storage unit 8 by the quantitative prediction unit 7, and through these identifiers it is possible to refer to the types, the durable years, the prices, the prices of replacement devices, the various costs on disposals (deconstructions), and the numbers of the auxiliary devices and the instruments, and a correction value per auxiliary device or per instrument that affects the plant efficiency.

Identifiers are also assigned to the piping associated with the auxiliary devices and instruments extracted from the piping/device specifications storage unit 8, and through these identifiers it is possible to refer to the durable years, the prices, the prices of replacement devices, the various costs on disposals, the piping lengths, a correction value per pipe unit length that affects the plant efficiency.

Through the identifiers of the bolts/nuts associated with the auxiliary devices and instruments, it is possible to refer to the durable year of each bolt/nut and the cost per auxiliary device or per instrument using the piping/device specification storage unit 8. The plant-efficiency correction value 110 (correction value $\Delta\eta$ of the plant efficiency in the formula (1) described later) set for each auxiliary device and instrument represents a correction value relative to the plant efficiency. The power plant efficiency correction value 110 has three types: a correction value for correcting the power output such as auxiliary power, a correction value for correcting the plant efficiency itself such as a pressure lost of the piping, and a correction value for correcting the fuel flow rate.

The quantitative prediction unit 7 outputs each power plant efficiency correction value 110 in association with the auxiliary devices/piping list 103.

<Power Plant System Efficiency Prediction Unit 6>

The power plant system efficiency prediction unit 6 as shown in Fig. 1 calculates the fuel consumption characteristics 102 representing a fuel consumption in each load band of the power plant system based on the major component information/major component connection information 101 extracted in the plant major component information generation unit 5, the power plant system efficiency correction value 110 extracted in the quantitative prediction unit 7.

The fuel consumption characteristics 102 represents in a function form how much fuel is consumed at every point of load in a range from a fuel consumption with no power output (0%) to a fuel consumption at a rated load (100%).

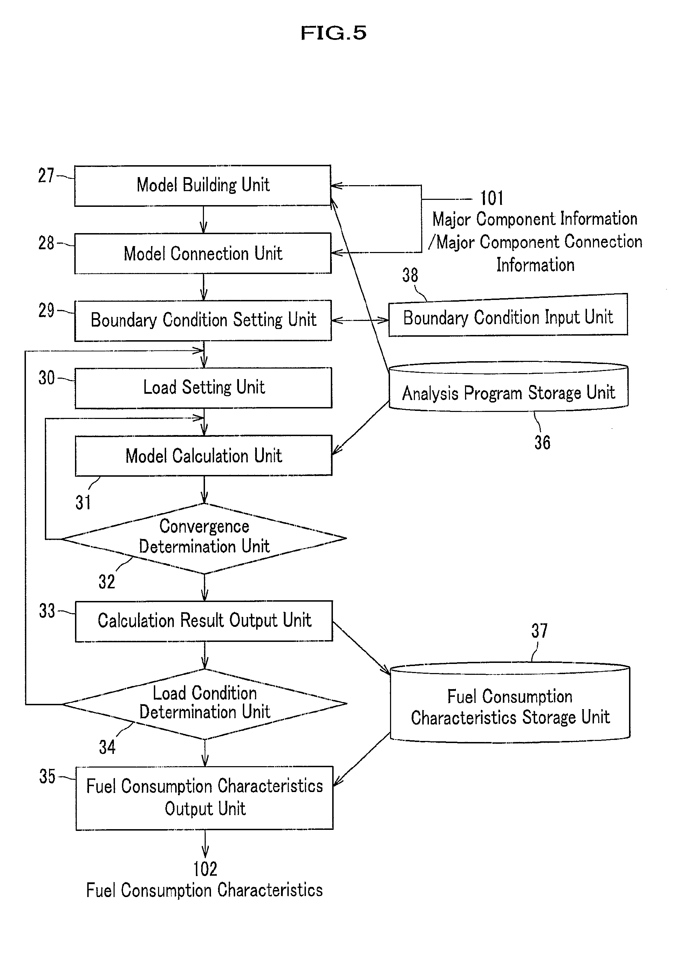

The calculation process of the fuel consumption characteristics 102 in the power plant system efficiency prediction unit 6 is shown in Fig. 5.

The model building unit 27 as shown in Fig. 5 receives the major component information of the major component information/major component connection information 101, and associates this major component information with the hot-matter income/outgo calculation program that is stored in the analysis program storage unit 36.

The model connection unit 28 receives the major component connection information of the major component information/ major component connection information 101 and determines connection relations of the input/output signals among a plurality of previously associated hot-matter income/outgo calculation programs (hereinafter the hot-matter income/ outgo calculation program is also referred to as a "calculation program").

Specifically, based on the major component connection information that is connection information regarding the devices/equipments, calculation programs are associated in such a manner that an output result from a certain calculation program becomes input information into another calculation program. As an example of the above association among the calculation programs, there is a method to set an output signal of a calculation program located in the fluid upper stream to be an input signal of a calculation program located in the fluid lower stream. Input/output signals among the calculation programs include a fluid temperature, pressure and enthalpy, etc., that are required for a calculation of hot-matter income/outgo. The connection relations are set based on a predetermined rule. Such a calculation program for calculating the hot-matter income/outgo of the entire plant is referred to as the "plant performance estimation model". Since the input/output relations among the plural calculation programs are determined, at the time of the model execution, the models mutually input and output respective calculation results, so that the hot-matter income/outgo of the entire plant can be calculated.

Next, the boundary condition setting unit 29 outputs sub-lists of input variables not connected to the plant performance estimation models and model parameters to be defined by a user, and then sets the boundary conditions in the boundary condition input unit 38 to be the plant input/output signals.

The boundary conditions include an atmosphere temperature, atmosphere humidity, an atmosphere pressure, wind speed, a temperature of coolant water, and a fuel lower heating value, etc. The above boundary conditions respectively affect the efficiencies of the plant.

Next, the load setting unit 30 sets a plant load (target output) as a calculation condition for the plant performance estimation model. In order to determine the fuel consumption characteristics 102, this embodiment sets four points where the plant loads are 100% (= a power output required for the plant that is a target of the life cycle costing), 75%, 50%, and 25%.

In this embodiment, a value that a power output of the plant is expressed in a percentage relative to a rated output is referred to as the "plant load". A percentage (%) is used as a unit for the plant load, and a unit of power (such as megawatt) is used as a unit for the power output. The plant load at 100% represents the rated output of the motor at the time of planning, and the plant load at 0% is equivalents to the power output at 0 MW (unloaded condition) of the plant.

Next, the model calculation unit 31 first calculates a fuel flow rate at 100% of the plant load using the plant performance estimation model generated previously.

Then, the inner condition amount of the model at 100% of the plant load is defined as the initial condition, respective power outputs and respective fuel flow rates at 75%, 50% and 25% of the plant loads are calculated in order.

The convergence condition of the plant performance estimation model is determined by the convergence determination unit 32 based on the inner condition variables and the convergence condition of fuel flow rate of the plant performance estimation model.

To be more specific, the plant performance estimation model of the model calculation unit 31 calculates the hot-matter income/outgo through the iterative calculations. At this time, the convergence determination unit 32 monitors the inner condition amount (such as a pressure, a flow rate, a temperature, a power output and a fuel flow rate, etc.), and through the iterative calculations terminates the hot-matter income/outgo calculation if the inner condition amount becomes constant and has no change (becomes converged).

Specifically, the convergence condition denotes that there does or does not exist change in the inner condition amount through the iterative calculations, and that the inner condition amount becomes constant and finally does not change. It is theoretically impossible that there is no change in the inner condition amount at all; therefore, a predetermined threshold value is set, and it is determined to be "converged" if the inner condition amount varies at an extremely small value which is not greater than the predetermined threshold value.

The calculation result output unit 33 outputs the plant load that is a calculated result, and the power output and the fuel flow rate at this calculated plant load to the fuel consumption characteristics storage unit 37, where the plant load, the power output and the fuel flow rate are stored temporarily.

The iterative calculations from the load setting unit 30 to the calculation result output unit 33 using varied loads are controlled in the load condition determination unit 34.

The fuel consumption characteristics output unit 35 approximates the relation between the power output E and the fuel flow rate G based on the power output E (kW) and the fuel flow rate G (kg/s) at each load, using the following formula (1) that is a polynomial equation.

$$E = a_3 \left( \frac{G + \sum \Delta G}{G_0} \right)^3 + a_2 \left( \frac{G + \sum \Delta G}{G_0} \right)^2 + a_1 \left( \frac{G + \sum \Delta G}{G_0} \right) + a_0$$

$$+ \sum \Delta E + \sum \{ \Delta \eta \cdot LHV (G + \sum \Delta G) \} \qquad (1)$$

$$E = a_3 \left( \frac{G + \sum \Delta G}{G_0} \right)^3 + a_2 \left( \frac{G + \sum \Delta G}{G_0} \right)^2 + a_1 \left( \frac{G + \sum \Delta G}{G_0} \right) + a_0$$

$$+ \sum \Delta E + \sum \{ \Delta \eta \cdot LHV (G + \sum \Delta G) \} \qquad (1)$$

The power output E is represented by the formula (1) using the fuel flow rate G (kg/s), the fuel flow rate $G_0$ (kg/s) that is a standard rate for each device and equipment, and the correction value $\Delta \eta$ of the plant efficiency, the correction value $\Delta G$(kg/s) of the fuel flow rate, the correction value $\Delta E$(kW) of the power output, and the fuel lower heating value LHV(kJ/kg), which are calculated by the auxiliary equipments and the instruments.

Note that the plant efficiency $\eta$ and its correction value $\Delta \eta$ are obtained by normalizing the plant efficiency $\eta$ (0 to 100%) with 0 to 1.

In the formula (1), $\sum$ represents a summation of the correction values of every auxiliary device. The fuel consumption characteristics output unit 35 estimates the coefficients $a_3$ to $a_0$ of this polynomial equation using the least-square method or the like, and outputs each coefficient as the fuel consumption characteristics 102.

<Plan Generation Unit 9>

The plan generation unit 9 as shown in Fig. 1 finds the fuel consumption amount of the power plant assumed in the devices/equipment maintenance plan and in the power generation plan, and the durable years of the major components and the auxiliary devices, based on the major component information/major component connection information 101 from the plant major component information generation unit 5, the fuel consumption characteristics 102 from the power plant system efficiency prediction unit 6 and the auxiliary devices/piping list 103 from the quantitative prediction unit 7. The plan generation unit 9 determines, as time-series data, the maintenance and inspection time of the major components and the auxiliary devices based on the accumulated running time of the power plant, and outputs this data as the operation plan 104.

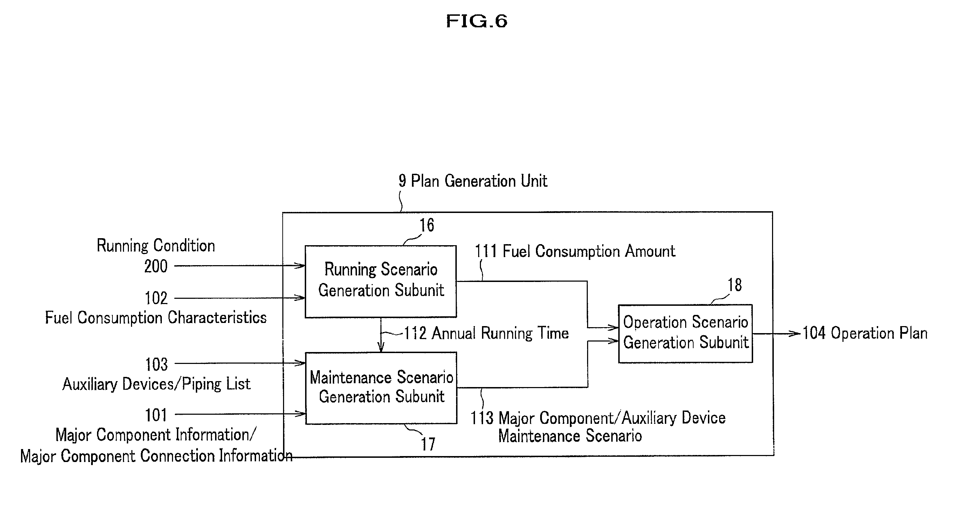

The detailed process of the plan generation unit 9 is illustrated in Fig. 6.

As shown in Fig. 6, the plan generation unit 9 includes the running scenario generation subunit 16, the maintenance scenario generation subunit 17 and the operation scenario generation subunit 18.

The running scenario generation subunit 16 calculates the accumulated running time and the accumulated value of the fuel consumption amount 111 through the year based on the running plan in a year/month/day unit which is specified in the running condition 200 and the fuel consumption characteristics 102. In the running plan, various running patterns can be defined such as a every night/day startup-stop running, a every weekend startup-stop running, a night/day continuous running, a maximum load running, a constant running with a partial load, a load-following running, and a load-following running in response to a load demand from a utility customer.

Based on the above running patterns, the running time of the major components and the auxiliary devices can be decided, and the maintenance/assist time of the related devices and equipments can also be decided. Then, the running scenario generation subunit 16 outputs the annual running time 112.

The maintenance scenario generation subunit 17 receives the major component information/major component connection information 101, the auxiliary devices/piping list 103 and the annual running time 112, and refers to durable years of the related major components in the major component information/major component connection information 101, and compares these durable years to the annual running time 112, so as to determine necessity of replacement and replacement time of the major components. The maintenance scenario generation subunit 17 also finds durable years of the related auxiliary devices and piping in the auxiliary devices/piping list 103, and compares the durable years to the annual running time 112, thereby to determine necessity of replacement and replacement time of the auxiliary devices, instruments, the piping of the auxiliary devices and the piping of the instruments. The time-series data regarding the necessity of replacement of the major components and the auxiliary devices and the replacement time thereof are output as the major component/auxiliary device maintenance scenario 113.

The operation scenario generation subunit 18 calculates a fuel cost per year based on the fuel consumption amount 111 and calculates profits resulted from the total power generation. The repair/maintenance cost per year is also calculated based on the major component/auxiliary device maintenance scenario 113, and sums up the calculated costs to be used as a cost index regarding the operation and maintenance. This cost index is output as the operation plan 104.

<Cost Prediction Unit 10>

The cost prediction unit 10 as shown in Fig. 1 receives the major component information/major component connection information 101 from the plant major component information generation unit 5, the operation plan 104 from the plan generation unit 9 and the auxiliary devices/piping list 103 from the quantitative prediction unit 7, and outputs the cost prediction result 105 (105a, 105b, 105c).

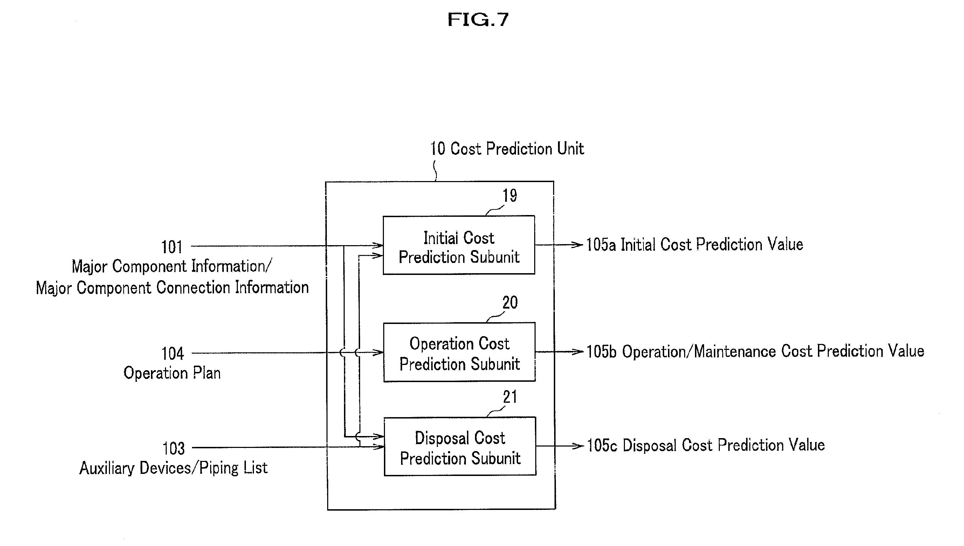

Fig. 7 shows a diagram showing the detailed configuration of the cost prediction unit 10.

The cost prediction unit 10 includes the initial cost prediction subunit 19, the operation cost prediction subunit 20 and the disposal cost prediction subunit 21.

The initial cost prediction subunit 19 calculates the initial cost prediction value 105a based on the prices of the major components that are elements of the major component information/major component connection information 101, and every price/number/weight of the auxiliary devices, the instruments, the piping of the auxiliary device and the piping of the instruments, which are elements of the auxiliary devices/piping list 103.

The operation cost prediction subunit 20 adds a correction with various operation costs to the operation/maintenance cost of the operation plan 104, and then outputs this corrected result as the operation/maintenance cost prediction value 105b.

The disposal cost prediction subunit 21 calculates the disposal cost prediction value 105c based on various disposal costs of the major components that are elements of the major component information/major component connection information 101 and every various disposal cost and the number of the auxiliary devices, the instruments and the piping of the auxiliary devices and the piping of the instruments that are elements of the auxiliary devices/piping list 103.

Note that the initial cost prediction value 105a, the operation/maintenance cost prediction value 105b and the disposal cost prediction value 105c that are calculated in this embodiment are not perfectly correspondent to the respective actual initial cost, operation/maintenance cost and disposal cost, and those costs are indexes only reflecting necessary information for the power plant system optimization. Accordingly, each value of the above costs is preferably used for a relative numerical comparison when various conditions are changed.

In order to associate the initial cost prediction value 105a, the operation/maintenance cost prediction value 105b and the disposal cost prediction value 105c with the actual values of the initial cost, the operation/maintenance cost and the disposal cost respectively, the initial cost may be estimated in detail by costing the welding of the piping and the electric wiring of the instruments, and by estimating the construction costs such as the wiring installation (such as cable trays) or the control devices and the plant housing, etc, for example. In addition, in the initial cost prediction subunit 19, the operation cost prediction subunit 20 and the disposal cost prediction subunit 21, each of the initial cost, the operation/maintenance cost and the disposal cost is corrected by using coefficients and bias values, so as to convert each cost into an approximate value as close as to an actual performance.

<Optimization Unit 11>

The optimization unit 11 as shown in Fig. 1 receives input data from the initial cost prediction value 105a, the operation/maintenance cost prediction value 105b, the disposal cost prediction value 105c and the optimizing method selection unit 12, and outputs the optimized result 107 to the optimized result output unit 13.

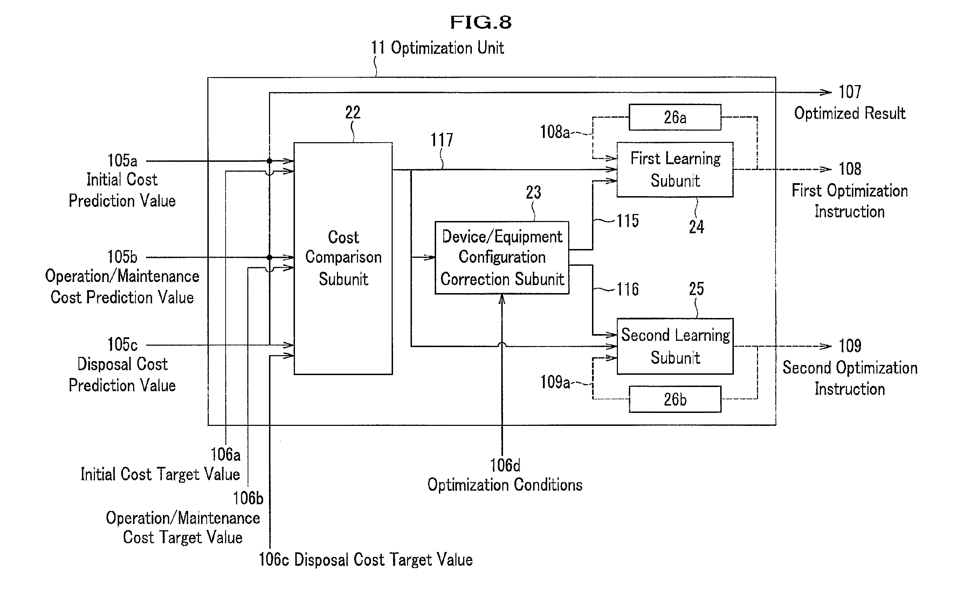

Fig. 8 is a schematic diagram showing the details of the optimization unit 11.

The optimization unit 11 includes the cost comparison subunit 22, the device/equipment configuration correction subunit 23, the first learning subunit 24, the second learning subunit 25, and the temporary memories 26a, 26b.

The cost comparison subunit 22 receives the initial cost prediction value 105a and the initial cost target value 106a, the operation/maintenance cost prediction value 105b and the operation/maintenance cost target value 106b, the disposal cost prediction value 105c and the disposal cost target value 106c, and outputs the life cycle costing value 117 that is a cost value regarding construction, operation/maintenance or disposal of the power plant.

The life cycle costing value 117 is obtained by using the following formula (2) with the initial cost prediction value vi, the initial cost target value vi(0), the operation/maintenance cost prediction value vr, the operation/maintenance cost target value vd(0) and the weighting coefficients ki, kr, kd for each cost, where x is the life cycle costing value 117.

$$x = k_i(v_i - v_i(0))^2 + k_r(v_r - v_r(0))^2 + k_d(v_d - v_d(0))^2 \qquad (2)$$

The weighting coefficients ki, kr, kd respectively represent an importance of optimization for each cost at the time of optimization. It is possible to appropriately increase each value of the weighting coefficients ki, kr, kd, thereby to provide optimization for each cost at a higher level.

As such, a user can appropriately increase or decrease each value of the weighting coefficients ki, kr, kd, so as to optimize the life cycle costing value 117.

The device/equipment configuration correction subunit 23 receives the life cycle costing value 117 and the optimization condition 106d, and outputs the major component specifications correction instruction 115 and the auxiliary device usage correction instruction 116 in accordance with the optimization condition 106d.

The major component specifications correction instruction 115 serves for correcting contents of the first optimization instruction 108, and corrects the device/equipment type information of the list of the major pumps that are the major components and the major devices and equipments subordinate to the major components, which are included in the first optimization instruction 108.

The device/equipment type information is associated with the durable years, the device/equipment prices, the replacement device prices, the various disposal costs, and the fluid temperature/pressure/flow rate conditions of fluids that flow in and out, and by changing this device/equipment type information, it is possible to give a significant perturbation (change) to the life cycle costing value 117. The major component specifications correction instruction 115 provides an effect to prevent a local optimized solution that is a solution locally optimized in the optimizing operation.

On the other hand, the auxiliary device specifications correction instruction 116 serves for correcting contents of the second optimization instruction 109, and corrects the device/equipment type information of the auxiliary device/ instrument data list included in the second optimization instruction 109. The device/equipment type information is associated with the durable years, the prices, the replacement device prices, the various disposal costs, the numbers, the auxiliary devices, and the correction values that affect the power plant efficiency per instrument, and by changing this device/equipment type information, it is possible to give the life cycle costing value 117 a smaller perturbation (change) compared to the major components. The auxiliary device specifications correction instruction 116 provides an effect to make a solution converge on an optimized solution in the optimizing operation.

The first learning subunit 24 receives the life cycle costing value 117, the previous calculated value of the first optimization instruction 108a, and the major component specifications correction instruction 115, and corrects the previous calculated value of the first optimization instruction 108a using the major component specifications instruction 115 so as to minimize the life cycle costing value 117 that is the total cost of the plant to 0 (minimum value = optimized solution). The previous calculated value of the first optimization instruction 108a is stored in the temporary memory 26a, and this temporarily stored value is used. An enforced learning method through the neural network or an error backpropagation method may be used in the first learning subunit 24.

The major component specifications correction instruction 115 gives a change to the types of the major components in the major component lists at an initial stage, and updates the inner variables of the first learning subunit 24 so as to search for the optimized combination of the major component lists depending on the optimization level of the resulted life cycle costing value 117 ("0" is optimum in the formula (2)). A user can appropriately vary each degree of change provided by the major component specifications correction instruction 115 and the auxiliary device specifications correction instruction 116 depending on the optimization condition 106d.

If the major component specifications correction instruction 115 is set to give change at a relatively smaller degree, and the auxiliary device specifications correction instruction 116 is set to give change at a relatively greater degree, it is possible to progress a solution convergence. To the contrary, if the major component specifications correction instruction 115 is set to give change at a relatively greater degree, and the auxiliary device specifications correction instruction 116 is set to give change at a relatively smaller degree, it is possible to get out of a local solution.

The second learning subunit 25 receives the life cycle costing value 117, the previous calculated value of the second optimization instruction 109a and the auxiliary device specifications correction instruction 116, and corrects the previous calculated value of the second optimization instruction 109a using the auxiliary device specifications instruction 116, so as to set the life cycle costing value 117 as close as to 0 (minimum value = optimized solution). The previous calculated value of the second optimization instruction 109a is stored in the temporary memory 26b, and this temporarily stored value is used.

In addition, the initial cost prediction value 105a, the operation/maintenance prediction value 105b, and the disposal cost prediction value 105c are output as the optimized result 107 to the optimized result output unit 13. A user confirms these prediction values 105a, 105b, 105c during the calculation or when the calculation is completed, so that the user can grasp optimized situations.

In this way, the prediction values 105a, 105b, 105c are also set to be displayed for a user so that the user can use these prediction values as indexes when changing various conditions. Since the calculation from the plant major component information generation unit 5 to the optimization unit 11 as shown in Fig. 1 is executed repeatedly outside the hot-matter income/outgo calculation using the plant performance estimation model, the calculated results of the initial cost prediction value 105a, the operation/maintenance cost prediction value 105b and the disposal cost prediction value 105c are sequentially varied.

In this embodiment, only the optimized result 107 is exemplified as information to be output to the optimized result output unit 13, but other various calculated results may also be displayed, such as the plant information 100, the major component information/major component connection information 101, the fuel consumption characteristics 102, the auxiliary devices/ piping list 103, the operation plan 104, the plant life cycle costs, the power plant system efficiency correction value 110, and the plant efficiency, etc..

<Display Examples of Power Plant Life Cycle Costing System 1>

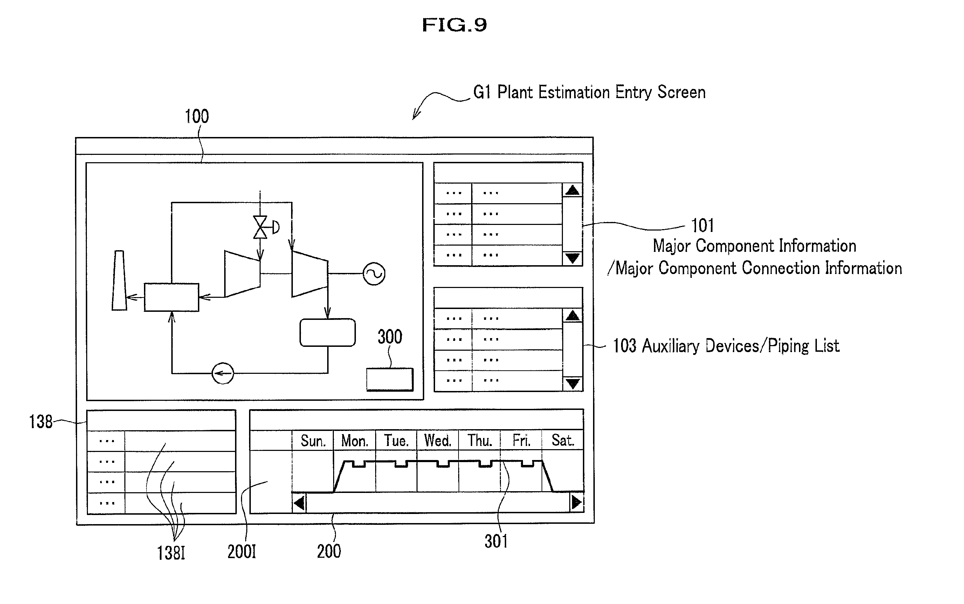

Descriptions will be provided on display examples of the optimized result output unit 13 in the power plant life cycle costing system 1 (see Fig. 1) with reference to the plant estimation entry screen G1 (see Fig. 9).

<Plant Estimation Entry Screen G1>

Fig. 9 shows an example of the plant estimation entry screen G1 where information input by a user and information to prompt the user to confirm his or her input information are displayed.

The plant estimation entry screen G1 displays information from the flow chart generation unit 4 (see Fig. 1) as a plant configuration diagram of the plant information 100.

The major component information/major component connection information 101 and the auxiliary devices/ piping list 103 in the plant estimation entry screen G1, which are obtained from the plant information 100, are displayed in their initial statuses when obtained in the plant major component information generation unit 5 and the quantitative prediction unit 7 as shown in Fig. 1.

The boundary condition input unit 138 of the plant estimation entry screen G1 includes the entry section 138I that is necessary at the time of the plant analysis. In the entry section 138I of the boundary condition input unit 138, the boundary conditions set through the above-mentioned boundary condition input unit 38 as shown in Fig. 5 are displayed as the initial values. Note that the boundary conditions include an atmosphere temperature, atmosphere humidity, an atmosphere pressure, wind speed, coolant water, and a fuel lower heating value, etc., as mentioned above. The above boundary conditions affect the efficiency of the plant, respectively.

The entry section 138I is a field where the boundary conditions can be changed and entered for the sake of the plant optimization.

The running condition 200 in the plant estimation entry screen G1 includes the annual plant running plan entry section 2001 and has a function to display the input result 301.

Now, examples of input data of the annual plant running plan to be input into the annual plant running plan entry section 2001 are as follows:

- - the plant running plan per year (operation/stop of the plant);
- - the plant running plan per month (start-up date of the week, continuous running date of the week and stop date of the plant);
- - the plant running plan per week (start-up date, continuous running date, stop date, plant load (%) per time period of a day of the plant), etc.

In Fig. 9, as a display example of the annual running plan, the plant target load 302 of a week (7 days) is displayed in a line plot as the input result 301. Other contents to be displayed in the running condition 200 may include the monthly plant target load and the annual plant target load, etc., for example. The above mentioned display can be appropriately changed by changing the input data into the plant annual running plan entry section 2001.

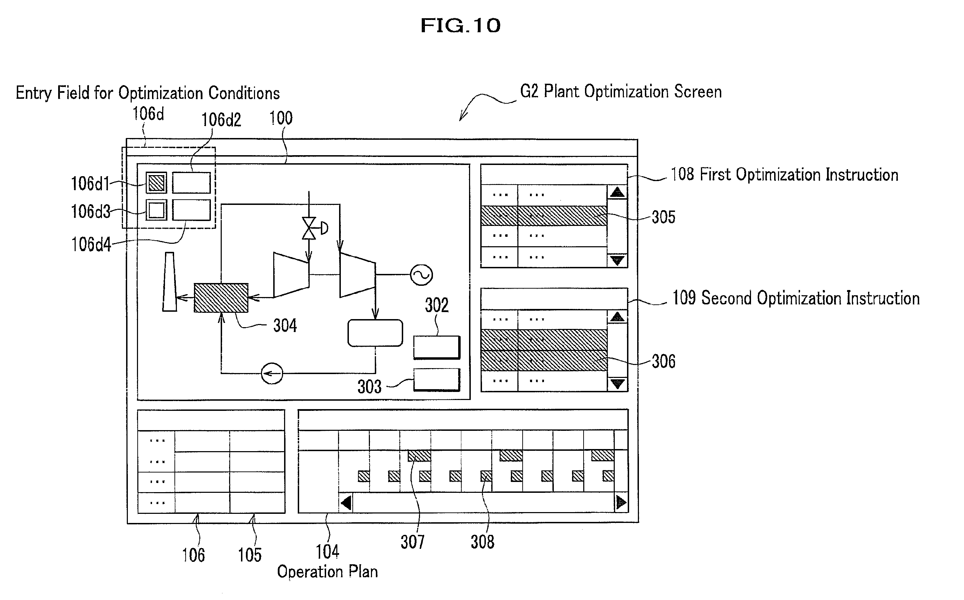

After all the conditions are entered into the boundary condition entry section 138I and the plant annual running plan entry section 2001, the optimization button 300 in the plant estimation entry screen G1 is pressed to start the power plant life cycle optimization through the convergence calculations, and the plant estimation entry screen G1 (see Fig. 9) is shift to the plant optimization screen G2 (see Fig. 10).

<Plant Optimization Screen G2>

Next, descriptions will be provided on the plant optimization screen G2 as a display example of the optimizing method selection unit 12 and the optimized result output unit 13, with reference to Fig. 10.

Fig. 10 shows an example of the plant optimization screen G2 that displays information input by a user during the optimization calculation and information to be confirmed by the user when completing the optimization calculation.

A plant configuration diagram is displayed in the plant information 100 of the plant optimization screen G2, in the same manner as in the plant estimation entry screen G1. The numeral reference 304 in Fig. 10 represents a major component whose type and specification are changed through the optimization process. In the plant optimization screen G2, the first optimization instruction 108 is displayed as the major component list during being optimized. The numeral reference 305 in Fig. 10 represents the major component whose type and specification is changed in the optimization process by the first optimization instruction 108, and corresponds to the major component 304 of the plant information 100 in the plant optimization screen G2.

The plant optimization screen G2 displays the second optimization instruction 109 as the auxiliary deices/piping list during being optimized. The numeral reference 306 of Fig. 10 represents the major component whose type and specification are changed through the optimization process.

The cost prediction result 105 is displayed in a table format in the plant optimization screen G2, in order of the initial cost prediction value 105a, the operation/maintenance cost prediction value 105b, and the disposal cost prediction value 105c from the above. The cost target value 106 is displayed in the plant optimization screen G2 in order of the initial cost target value 106a, the operation/maintenance target value 106b and the disposal cost target value 106c from the above, in such a manner that these target values 106a, 106b, 106c are displayed on the left of the respective corresponding prediction values of the cost prediction result 105 (the initial cost prediction value 105a, the operation/maintenance prediction value 105b and the disposal cost prediction value 105c). The initial cost target value 106a, the operation/maintenance target value 106b and the disposal cost target value 106c of the cost target value 106 are entry fields of the plant optimization screen G2, and these target values can be entered to update the target values at the time of staring the analysis or during the analysis.

The operation plan 104 of the plant optimization screen G2 chronologically displays a list of the update times of the major components and or the auxiliary devices/piping that results from the optimization operation. Fig. 10 shows a display example of the update times of the major components or the auxiliary devices/piping that are displayed in the screen. Note that the operation plan 104 is omitted in Fig. 10.

The numeral reference 307 of Fig. 10 represents the update time of the major component, and the numeral reference 308 represents the update time of the auxiliary device. In Fig. 10, detailed illustrations of the numeral references 307, 308 are omitted.

The plant optimization screen G2 includes the entry field 106d for the optimization conditions within the drawing of the plant information 100, and this entry field 106d serves as the optimizing method selection unit 12 that is means for changing/adjusting the optimization conditions.

The entry field 106d includes the selection check box 106d1 for specifying an execution/stop of the optimization for the major component, and the selection check box 106d1 for specifying an execution/stop of the optimization for the auxiliary device/piping, as well as the entry field 106d2 for directly inputting a degree of change specified by the major component specifications correction instruction, and the input field 106d4 for inputting a degree of change specified by the auxiliary device specifications correction instruction when performing the optimization.

The degree of change provided by the major component specifications correction instruction that is entered into the entry field 106d2 denotes a certain ratio relative to the total cost of all the devices and equipments included in the major component (for example, 15% relative to 100% of all the devices/equipments of the major component). Similarly, the degree of change specified by the auxiliary device specifications correction instruction that is entered into the entry field 106d4 denotes a certain ratio relative to the total cost of all the devices and equipments included in the auxiliary device (for example, 10% relative to 100% of all the devices/equipments of the auxiliary device).

As the execution control means for the optimization calculation executed by the optimization unit 11, there are provided the pause/restart button 302 and the cancel button 303 in the plant optimization screen G2. When the pause/restart button 302 is pressed, the optimization calculation is controlled to be paused or restarted. When the cancel button 303 is pressed, the optimization calculation is controlled to be cancelled, and then the plant optimization screen G2 is shift to the plant estimation entry screen G1 that is a condition entry screen (see Fig. 9). This screen shift to the plant estimation entry screen G1 (see Fig. 9) enables a re-entry of the driving condition or the boundary condition, so that a calculation under a different estimation condition can be performed.

In the plant configuration optimization by the power plant life cycle costing system 1 according to this embodiment, the initial cost target value 106a, the operation/maintenance cost target value 106b and the disposal cost target value 106c in the plant optimization screen G2 (see Fig. 10) are changed in accordance with user's needs. In order to enhance the performance of the power plant life cycle costing system 1, the operation/maintenance cost is set to be relatively lower than the current cost estimation value, thereby to optimize the plant configuration such that the profit becomes maximum and the fuel consumption becomes minimum in the power generation. In order to secure a margin for the performance of the power plant life cycle costing system 1, the initial cost target value 106a is set to be relatively higher, thereby to set the performance of the major components or the auxiliary devices relatively higher.

Generally, in order to enhance reliability of the power plant life cycle costing system 1, the initial cost target value 106a is set to be higher so as to enhance performance of the major components, and the operation/maintenance cost target value is set to be lower so as to widen the time interval between each maintenance/inspection and to enhance performance of the auxiliary devices/piping. In order to adjust respective degrees of the optimization of the major components and the auxiliary devices, the optimization condition 106d in the plant optimization screen G2 (see Fig. 10) that is the optimizing method selection unit 12 is changed, thereby to change the degrees of the perturbation (change) of the major components and the auxiliary devices. For example, the degree of the perturbation (change) of the major component is set to be minimum (or no perturbation) so as to fix the major component in the current status, so that only the configuration of the auxiliary device can be optimized.

<<Operational Effects>>

Since the power plant life cycle costing system 1 (power plant life cycle costing system C) according to this embodiment calculates or generates the power plant life cycle cost, the plant efficiency and the operation plan including the maintenance plan, based on the information from the flow chart generation unit 4, the specifications/cost information of the auxiliary devices stored in the piping/device specifications storage unit 8 and the optimization conditions of the plant configuration input by the optimizing method selection unit 12, there is an advantage to optimize the power plant in both phases of the major components and the auxiliary devices, thereby to calculate the power plant life cycle cost in more detail.

The power plant life cycle costing system 1 (power plant life cycle costing system C) includes the plant major component information generation unit 5 having the plant major component information generation function to generate the power plant major information based on the information from the flow chart generation unit 4 such as the major component information/major component connection information 101, the power plant system efficiency prediction unit 6 that predicts the fuel consumption characteristics 102 during the plant running operation based on the plant major information and the auxiliary device specifications/cost information, and the quantitative prediction unit 7 that generates the auxiliary devices/piping list 103 that is necessary for the power plant constructions. Accordingly, there is an advantage to calculate the power plant life cycle cost at a higher speed, using information necessary for the cost estimations, such as information regarding prices of devices/equipments, prices of maintenance devices and fuel consumption.

Since the power plant life cycle costing system 1 (power plant life cycle costing system C) includes the plan generation unit 9 to generate the operation plan 104 regarding the standard maintenance time and device replacing time of the power plant based on the fuel consumption characteristics 102 and the auxiliary devices/piping list 103, there is an advantage to estimate the running cost that is necessary for estimating the power plant life cycle cost in both the phases of the cost for the load running and the cost for the inspections.

The power plant life cycle costing system 1 (power plant life cycle costing system C) includes the cost prediction unit 10 that predicts various costs regarding constructions, operation/maintenance and deconstructions (disposal) of the plant in combination of various information: the major component information/major component connection information 101 from the plant major component information generation unit 5, the operation plan 104 from the plan generation unit 9, and the auxiliary devices/piping list 103 from the quantitative prediction unit 7. Therefore, there is an advantage to allow the power plant planning in consideration of the total costs regarding the power plant life cycle such as constructions, operation/maintenance, deconstructions (disposal) of the power plant.

The power plant life cycle costing system 1 (power plant life cycle costing system C) includes the optimization unit 11 that outputs the first optimization instruction 108 to correct the major component specifications, and the second optimization instruction 109 to correct the specifications of piping/devices, in accordance with the optimization condition 106d specified by the plant prediction result (initial cost prediction value 105a to disposal cost prediction value 105c) obtained in the cost prediction unit 10 and the optimizing method selection unit 12. Accordingly, there is an advantage to prevent a local optimized solution and provide a comprehensive optimized solution by the switching between the first and second optimization instructions 108, 109.

Now, the effects of the power plant life cycle costing system 1 (power plant life cycle costing system), in comparison to the above-mentioned JP2000-122712 A and JP2002-34151 A are described.

In the light of the power plant life cycle costing, when compared to the JP2000-122712 A, the invention disclosed in JP2000-122712 A optimizes the plant maintenance time in the phases of reliability and economic efficiency.

To the contrary, the power plant life cycle costing system 1 (power plant life cycle costing system C) according to this embodiment uses the maintenance time recommended by a plant maker as the maintenance time of each device/equipment, and optimizes the maintenance time and the maintenance cost of the entire plant in combination of the maintenance times of plural devices/equipments. The maintenance time according to this embodiment is not relied on a statistic approach such as reliability and mean time between failures, but relied on the maker's recommended time. Accordingly, without saving a margin for safety and reliability of the plant, the safe and economic plant operation with the least risk can be expected. This method according to this embodiment works very effectively in the power plant that supplies power stably and continuously.

Meantime, in the light of the power plant system optimization, when compared to JP2002-34151 A, the invention disclosed in JP2002-34151 A optimizes various devices/equipments constituting the power plant system using single optimization means.

To the contrary, the power plant life cycle costing system 1 (power plant life cycle costing system C) separates various devices/equipments constituting the power plant into the major components and the other devices and equipments (such as the auxiliary devices, the devices and the piping), and optimizes these two configurations in accordance with user's needs such as the initial cost, the operation/maintenance cost and the disposal cost. Normally, the configuration of the major components is defined in accordance with the plant owner's specifications, so that no optimization is carried out by changing the major component configuration in a positive manner. However, although even in accordance with the plant owner's specifications of the major components, no sufficient optimization is achieved by optimizing the auxiliary devices, the devices and the piping, or no sufficient cost effects can be obtained through the current efficiency and operation cost, it is possible to realize an optimization by changing the major component configuration, thus it is possible to provide the plant owner with a broader and persuasive plant optimized solution of the power plant.

This embodiment illustrates the plant estimation entry screen G1 (see Fig. 9) and the plant optimization screen G2 (see Fig. 10) as the optimized result output unit 13, but the optimized result 107 may be output to a printer so as to be printed out, and the optimized result output unit 13 is not limited to a screen of a display device.

This embodiment illustrates the major component information/major component connection information 101 as the plant major information, but the plant major information may include information other than the major component information/major component connection information 101.

<Industrial Applicability>

The present invention is applicable not only to the life cycle costing of a power plant that supplies electric power, but also the life cycle costing of a co-generation plant that supplies cold/hot heat or electric power or both. In addition, the present invention is applicable to a plant specifications planning system of a power plant that supplies electric power, particularly a power plant capable of quantitatively estimating economic performance and environment performance of a plant.

The present invention realizes the life cycle costing system capable of estimating a life cycle cost from constructions, operation, maintenance to disposal of a plant in an integral manner, and also capable of estimating an operation plan including efficiency, reliability and maintenance plan of a plant in a comprehensive manner.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

**Claims**

1. A power plant life cycle costing system for costing a power plant life cycle,
   the system comprising:

   a flow chart generation unit (4) for generating a power plant system flow chart based on specifications and cost information of major components of the power plant stored in a major component specifications storage unit (3), and plant specifications input from a plant specifications input unit (2);
   a power plant planning unit for calculating and generating a power plant life cycle cost, a plant efficiency and an operation plan including a maintenance plan as optimization indexes of a power plant configuration based on information from the flow chart generation unit (4), specifications and cost information of auxiliary devices of the power plant stored in a piping and device specifications storage unit (8), and optimization conditions of a power plant configuration input by an optimizing method selection unit (12); and
   an optimized result output unit (13) for outputting a calculated value and a planned result calculated and generated by the power plant planning unit.

2. The power plant life cycle costing system as claimed in the claim 1, wherein
   the power plant planning unit comprises:

   a power plant major component information generation unit (5) for generating major component information and major component connection information from information of the power plant system flow chart;
   an efficiency prediction unit (6) for predicting fuel consumption characteristics during a plant running operation based on the major component information and the major component connection information, and the specifications and the cost information of auxiliary devices; and
   a quantitative prediction unit (7) for generating an auxiliary devices and piping list that is necessary for power plant constructions.

3. The power plant life cycle costing system as claimed in the claim 2, wherein
   the power plant planning unit comprises a plan generation unit (9) for generating the operation plan regarding a standard maintenance time and device replacing time of the power plant based on the fuel consumption characteristics and the auxiliary devices and piping list.

4. The power plant life cycle costing system as claimed in the claim 3, wherein
   the power plant planning unit comprises a cost prediction unit (10) for predicting each cost regarding constructions, operation/maintenance and deconstructions of the power plant based on the major component information and the major component connection information from the plant major component information generation unit (5), the operation plan from the plan generation unit, and the auxiliary devices and piping list from the quantitative prediction unit (7).

5. The power plant life cycle costing system as claimed in the claim 4, wherein
   the power plant planning unit comprises an optimization unit (11) for outputting a first optimization instruction to correct specifications of major component and a second optimization instruction to correct specifications of piping and devices in accordance with an optimization condition specified by a plant prediction result obtained in the cost prediction unit (10) and the optimizing method selection unit (12), and
   the optimized result output unit (13) outputs an optimized result that is a calculated result by the optimization unit (11).

6. A power plant life cycle costing method for costing a power plant life cycle,
   the method comprising:

   in a flow chart generation unit (4), generating a power plant system flow chart based on specifications and cost information of major component of the power plant stored in a major component specifications storage unit (3), and plant specifications input from a plant specifications input unit (2);
   in a power plant planning unit, calculating and generating a power plant life cycle cost, a plant efficiency and an operation plan including a maintenance plan as optimization indexes of a power plant configuration based on information from the flow chart generation unit (4), specifications and cost information of auxiliary devices of the power plant stored in a piping and device specifications storage unit (8), and optimization conditions of a power plant configuration input by an optimizing method selection unit (12); and
   in an optimized result output unit (13), outputting a calculated value and a planned result calculated and generated by the power plant planning unit.

7. The power plant life cycle costing method as claimed in the claim 6, wherein
the method further comprises:

in a power plant major component information generation unit (5) of the power plant planning unit, generating major component information and major component connection information from information of the power plant system flow chart;
in an efficiency prediction unit (6) of the power plant planning unit, predicting fuel consumption characteristics during a plant running operation based on the major component information and the major component connection information, and the specifications and the cost information of auxiliary devices; and
in a quantitative prediction unit (7) of the power plant planning unit, generating an auxiliary devices and piping list that is necessary for power plant constructions.

8. The power plant life cycle costing method as claimed in the claim 7, wherein
the method further comprises, in a plan generation unit (9) of the power plant planning unit, generating the operation plan regarding a standard maintenance time and device replacing time of the power plant based on the fuel consumption characteristics and the auxiliary devices and piping list.

9. The power plant life cycle costing method as claimed in the claim 8, wherein
the method further comprises, in a cost prediction unit (10) of the power plant planning unit, predicting each cost regarding constructions, operation/maintenance and deconstructions of the power plant based on the major component information and the major component connection information from the plant major component information generation unit (5), the operation plan from the plan generation unit, and the auxiliary devices and piping list from the quantitative prediction unit (7).

10. The power plant life cycle costing method as claimed in the claim 9, wherein
the method further comprises, in an optimization unit (11) of the power plant planning unit, outputting a first optimization instruction to correct specifications of major components and a second optimization instruction to correct specifications of piping and devices in accordance with an optimization condition specified by a plant prediction result obtained in the cost prediction unit (10) and the optimizing method selection unit (12), and
in the optimized result output unit (13), outputting an optimized result that is a calculated result by the optimization unit (11).

# FIG.1

1 Power Plant Life Cycle Costing System

FIG.2

# FIG.3

C Power Plant Life Cycle Costing System

EP 2 290 596 A1

FIG.4

5 Plant Major Component Information Generation Unit

100
Plant Information

14
Major Component List
Generation Subunit

Major Component
Connection List
Generation Subunit
15

101
Major Component Information/
/Major Component Connection
Information

# FIG.5

27 — Model Building Unit

28 — Model Connection Unit

29 — Boundary Condition Setting Unit

30 — Load Setting Unit

Model Calculation Unit
31

Convergence Determination Unit
32

33 — Calculation Result Output Unit

Load Condition Determination Unit
34

35 — Fuel Consumption Characteristics Output Unit

— 101
Major Component Information /Major Component Connection Information

38
Boundary Condition Input Unit

Analysis Program Storage Unit
36

37
Fuel Consumption Characteristics Storage Unit

102
Fuel Consumption Characteristics

**FIG.6**

9 Plan Generation Unit

Running Condition
200

102
Fuel Consumption Characteristics

103
Auxiliary Devices/Piping List

101
Major Component Information/
Major Component Connection Information

16
Running Scenario
Generation Subunit

111 Fuel Consumption Amount

112 Annual Running Time

Maintenance Scenario
Generation Subunit

17

113 Major Component/Auxiliary Device
Maintenance Scenario

18
Operation Scenario
Generation Subunit

104 Operation Plan

FIG.7

10 Cost Prediction Unit

19

Initial Cost
Prediction Subunit

101
Major Component Information/
Major Component Connection Information

→ 105a Initial Cost Prediction Value

20

Operation Cost
Prediction Subunit

104
Operation Plan

→ 105b Operation/Maintenance Cost Prediction Value

21

Disposal Cost
Prediction Subunit

103
Auxiliary Devices/Piping List

→ 105c Disposal Cost Prediction Value

# FIG.8

**11 Optimization Unit**

105a
Initial Cost
Prediction Value

105b
Operation/Maintenance
Cost Prediction Value

105c
Disposal Cost
Prediction Value

22

Cost
Comparison
Subunit

117

23

Device/Equipment
Configuration
Correction Subunit

115

116

108a

26a

First Learning
Subunit

24

25

Second Learning
Subunit

109a

26b

107
Optimized Result

108
First Optimization
Instruction

109
Second Optimization
Instruction

106a
Initial Cost Target Value

106b
Operation/Maintenance
Cost Target Value

106c Disposal Cost Target Value

106d
Optimization Conditions

EP 2 290 596 A1

**FIG.9**

G1 Plant Estimation Entry Screen

100

101
Major Component Information
/Major Component Connection Information

300

103 Auxiliary Devices/Piping List

138

| | | Sun. | Mon. | Tue. | Wed. | Thu. | Fri. | Sat. |
|---|---|---|---|---|---|---|---|---|

1381    2001    200    301

EP 2 290 596 A1

# FIG.10

Entry Field for Optimization Conditions

G2 Plant Optimization Screen

106d  106d2  100

106d1
106d3
106d4

108 First Optimization Instruction

305

109 Second Optimization Instruction

306

302
303
304

106  105  104
Operation Plan

307  308

| | Europäisches Patentamt European Patent Office Office européen des brevets | **EUROPEAN SEARCH REPORT** | Application Number EP 10 17 3148 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CZIESLA F ET AL: "Cost-effective design of thermal power plants using intelligent systems", INFORMATION INTELLIGENCE AND SYSTEMS, 1999. PROCEEDINGS. 1999 INTERNAT IONAL CONFERENCE ON BETHESDA, MD, USA 31 OCT.-3 NOV. 1999, LOS ALAMITOS, CA, USA,IEEE COMPUT. SOC, US LNKD- DOI:10.1109/ICIIS.1999.810273, 31 October 1999 (1999-10-31), pages 262-269, XP010362273, ISBN: 978-0-7695-0446-9 * Sections 3.1 and 4.1 * | 1-10 | INV. G06Q10/00 |
| X | LU S ET AL: "Power Plant Analyser-A Computer Code for Power Plant Operation Studies", IEEE TRANSACTIONS ON ENERGY CONVERSION, IEEE SERVICE CENTER, PISCATAWAY, NJ, US, vol. 11, no. 4, 1 December 1996 (1996-12-01), pages 742-747, XP011015457, ISSN: 0885-8969 * abstract * * Sextions I and II A-C * | 1-10 | TECHNICAL FIELDS SEARCHED (IPC) G06Q |

The present search report has been drawn up for all claims

| Place of search | Date of completion of the search | Examiner |
|---|---|---|
| Munich | 16 November 2010 | Gabriel, Christiaan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.............................................................
& : member of the same patent family, corresponding document

EPO FORM 1503 03.82 (P04C01)

## REFERENCES CITED IN THE DESCRIPTION

**Patent documents cited in the description**

- JP 2000122712 A
- JP 2002034151 A
- JP 2002297710 A
- JP 11142298 A
- JP 2002 A
- JP 34151 A